# EUROPEAN PATENT APPLICATION

(11) **EP 4 834 545 A1**
(43) Date of publication of application: **04.11.2026**
(21) Application number: 26168223.1
(22) Date of filing: 26.03.2026
(51) Int. Cl.: B25J 19/06, E05F 15/665, F24F 3/167

(54) **SAFETY BARRIER FOR AN OPENING**

(30) Priority: 29.04.2025 IT 202500009546
(71) Applicant: G.D S.p.A., 40133 Bologna (IT)
(72) Inventor: CANNAVINA, Matteo, 40133 Bologna (IT); ROMAGNOLI, Stefano, 40133 Bologna (IT)
(74) Representative: Tirloni, Bartolomeo

(57) **Abstract**

Safety barrier (5) for an opening (21) of a working area (2, 2'), the barrier comprising:
- a plurality of bulkheads positioned between two vertical guides (6) and comprising:
- a fixed bulkhead (7) arranged at a lower position;
- a first (8) and a second (9) movable bulkhead movable in sliding along the guides (6) between a respective opening position, wherein the movable bulkheads are side-by-side with the fixed bulkhead (7) and a respective closing position wherein the movable bulkheads are in a raised position for closing the opening;

- an actuator (10) for vertically moving the first movable bulkhead (8) alternatively between the respective closing position and the respective opening position;
- a first pulley (11) fixed to the first movable bulkhead (8); and
- a first elongated transmission element (13) comprising a first end fixed to the fixed bulkhead (7) and a second end fixed to the second movable bulkhead (9), and engaging the first pulley (11) with a flat contact face for moving the second movable bulkhead (9) synchronously to a movement of the first movable bulkhead,
wherein the actuator (10) is coupled to the first movable bulkhead (8) in a horizontally median position of the first movable bulkhead (8).

## Description

### Technical field of the invention

The present invention relates to a safety barrier for an opening, for example for physically and selectively separating a working area served by a robotic arm that crosses the opening, the working area being located inside a clean room.

### Prior art

US2007113991A1 describes a safety barrier for a robotic work station comprising a pair of vertical uprights and rigid panels cantilevered on an upright, which move between a lower open position and an upper closed position. The simultaneous movement of the panels is managed by a pneumatic cylinder and a pulley system.

### Summary of the invention

In the above context, the Applicant has found that the known safety barriers present some drawbacks and/or can be improved under one or more aspects.

In particular, the Applicant has observed that the safety barrier described in US2007113991A1 is unsuitable for being used in specific working environments, such as, for example, clean rooms and dry rooms, since following operation of the barrier over time the barrier causes a high release of particles and/or contaminants, which could compromise the conditions of the room, consequently violating industry regulations (e.g. ISO 14644) and/or deteriorating the production quality, up to a potential production stoppage.

The Applicant has therefore addressed the problem of being able to use a safety barrier for an opening of a working area inside a clean room and/or dry room, with limited or null impact on the critical operating conditions of the clean room or dry room, such as the content of particles in the air.

The Applicant has also observed that the known safety barriers are not suitable for openings of considerable dimensions, presenting durability problems in the presence of a considerable number of opening and closing cycles, also in the presence of high dimensions and weight.

The Applicant has furthermore noted that these problems are mainly due to the imbalance of the weights and/or of the forces in the movement of the components of said barriers.

According to the Applicant the above problem is solved by a safety barrier for an opening according to the appended claims and/or having one or more of the following characteristics.

According to one aspect the invention relates to a safety barrier for an opening.

Preferably the barrier comprises a pair of vertical guides.

Preferably the barrier comprises a plurality of bulkheads positioned between said guides and each having development on a respective vertical plane.

Preferably said plurality of bulkheads comprises a fixed bulkhead arranged at a lower position and a first and a second movable bulkhead.

Preferably each movable bulkhead is movable in sliding along said guides between a respective opening position, wherein the movable bulkhead is side-by-side with said fixed bulkhead for leaving said opening free, and a respective closing position wherein the movable bulkhead is in a raised position for closing said opening.

Preferably the barrier comprises an actuator configured for vertically moving said first movable bulkhead alternatively between the respective closing position and the respective opening position.

Preferably the barrier comprises a first pulley fixed to said first movable bulkhead, and a first elongated transmission element comprising a first end fixed to the fixed bulkhead and a second end fixed to said second movable bulkhead. Preferably said first elongated transmission element engages said first pulley for moving said second movable bulkhead synchronously to a movement of said first movable bulkhead.

Preferably said actuator is coupled to said first movable bulkhead in a median position of said first movable bulkhead with reference to a horizontal development direction of the first movable bulkhead.

According to one aspect the invention relates to a work station comprising a working area comprising a perimeter structure for physically and selectively preventing access of an operator into said working area, the perimeter structure comprising a safety barrier according to any embodiment of the present invention, arranged at an opening obtained in said perimeter structure.

According to one aspect the invention relates to a clean room or dry room comprising internally a work station according to any embodiment of the present invention.

The Applicant believes that the actuator coupled to the first movable bulkhead in a median position of the first movable bulkhead (namely a position along the horizontal development direction of the movable bulkhead substantially centred with respect to the two lateral ends of the movable bulkhead itself, for example between 40% and 60% of the length of the bulkhead) allows balancing of the forces acting on the movable bulkhead when moved, since the lifting force is equally distributed on the two ends which slide along the two guides. In this way possible rotations (e.g. on the development plane of the bulkheads) and/or flexions of the bulkhead and the consequent frictions between the surfaces in contact are limited or cancelled. Balancing of the loads during the opening and closing phases of the movable bulkheads favours symmetrical mechanical stresses on the sliding points of the barrier along the guides which in turn limit the overall mechanical wear of the stressed components (e.g. sliding rollers, guides, etc). The above solution therefore limits the release of particles, in addition to obtaining high smoothness of movement and/or high reliability of the safety barrier over time.

In the prior art solution, as for example described in US2007113991A1, positioning of the actuator (e.g. pneumatic cylinder) at only one end of a movable bulkhead generates a lifting force greater on one end of the bulkhead with respect to the other end, inducing rotations and/or flexions on the movable bulkhead which cause increase of frictions and/or asymmetrical stresses along the sliding guides during opening and closing thereof and therefore asymmetrical wear and consequent high release of particles, as well as limited duration over time and/or malfunctions of said barrier.

The present invention in one or more of the above aspects can present one or more of the following preferred characteristics.

Preferably said actuator comprises a fixed portion, fixed to said fixed bulkhead, and a movable portion, fixed to said first movable bulkhead in said median position of said first movable bulkhead.

Preferably said actuator is electric, for example of ball screw type. In this way the efficiency in transmission of the movement to the movable bulkheads is improved and the control of lifting and descent of said bulkheads results more precise. Furthermore, in case of failure (e.g. interruption of electric power supply) the descent speed of the first movable barrier results limited (due to the presence of the screw), thus improving the operating safety.

Preferably the barrier comprises a second pulley fixed to said first movable bulkhead. Preferably the barrier comprises a second elongated transmission element comprising a respective first end fixed to the fixed bulkhead and a respective second end fixed to said second movable bulkhead.

Preferably said second elongated transmission element engages said second pulley for moving (in cooperation with said first elongated transmission element) said second movable bulkhead synchronously to said movement of said first movable bulkhead.

Preferably said first and second pulley are arranged on opposite sides of said actuator along said horizontal development direction of the first movable bulkhead, more preferably in symmetrical position with respect to said actuator. In this way a balanced distribution of the forces and of the mechanical loads on the movable bulkheads is obtained, improving the dynamic balance thereof during operation and the smoother and more balanced movement thereof, with advantages in terms of limitation of wear of the components in contact with the guides.

Preferably said first and second pulley are arranged at horizontally opposite ends of said first movable bulkhead (for the purpose of increasing the overall balancing of the loads). For example, said first pulley is arranged (starting from one end of the bulkhead) within 20% of the length of the bulkhead, for example within 10% and said second pulley is arranged beyond 80% of the length of the bulkhead, for example beyond 90%.

Preferably said first pulley, and possibly second pulley, is directly fixed to an upper side of said first movable bulkhead. In this way, with respect to a comparative solution wherein the pulley/pulleys is/are directly fixed to the sliding carriages, the structural complexity and the overall bulk are reduced.

Preferably said first end of said first elongated transmission element is directly fixed to an upper side of said fixed bulkhead. In this way the overall length of the transmission element is reduced and installation thereof is simplified.

Preferably the barrier comprises, for each movable bulkhead, two carriages which slidingly engage respectively said guides. In this way a high stability and guidability of the movable bulkheads during movement thereof is obtained, reducing (with respect to a comparative solution with only one sliding carriage) the degree of rotations, flexions, jammings, and/or misalignments, especially in case of occurrence of imbalances in the horizontal distribution of the mechanical loads.

Preferably said two carriages support the respective movable bulkhead at respective horizontally opposite ends of the respective movable bulkhead. In this way, a high useful width of the opening is obtained.

Preferably each guide comprises a pair of opposed vertical rails, and each carriage comprises, for each rail, a respective pair of vertically superposed rollers which engage said rail in rolling. In this way undesired movements (e.g. oscillations, rotations or mechanical plays) of each carriage (and therefore of the respective movable barrier) are limited and high precision of sliding along the guide is obtained.

Preferably each rail, in a horizontal section, has convex V-shape and each roller has a circular groove countershaped to said rail and which engages said rail in rolling. In this way a precise mechanical coupling between roller and rail is achieved, which guarantees a self-centring of the roller on the rail. This limits the mechanical play, favours a constant and regular contact, provides high stability of the movement and limits the risk of derailments or undesired inclinations of the carriage.

Preferably the perimeter structure comprises at least one door, distinct from said barrier, for allowing access of an operator into said working area. In this way the operator can operate in the working area, for example for feeding a loaded pallet and withdrawing an unloaded pallet or vice versa.

Preferably the work station comprises a robotic arm having a base arranged externally to said working area for manipulating products in crossing of said opening. In this way the robotic arm, when the opening is closed by the safety barrier, remains physically completely separated from the working area, avoiding that an operator present in the working area can be hit by the robotic arm or by an object manipulated or thrown by the robotic arm.

Preferably said first (and possibly second) elongated transmission element is on a side of said barrier external with respect to said working area. In this way in case of breakage of the transmission element under load the risk that an operator present in the working area is hit is avoided.

Preferably the work station comprises one or more sensors for detecting a position of said first and/or second movable bulkhead and a control unit in communication with said one or more sensors and programmed for alternatively allowing and denying an opening of said door on condition that said detected position of said first and/or second movable bulkhead is respectively said respective closing position and said respective opening position. In this way the situation wherein the operator enters the working area with the opening open, and therefore potentially with the robotic arm operating in the working area through the opening, is avoided. Furthermore, such safety control logic avoids the necessity of stopping the robotic arm following an unauthorized access of the operator into the working area (necessity which instead occurs in comparative solutions wherein presence sensors detect the presence of an operator and cause stopping of the robotic arm, and therefore of the production).

Preferably said control unit is programmed for allowing a movement of said first and second movable bulkhead from said respective closing position to said respective opening position only on condition that said door is closed. Such solution achieves a high safety in the working area, since the situation wherein an operator is in the working area (condition possible following the condition of open door) with the movable bulkheads lowered, namely with open opening and consequent potential risk of contact between the robotic arm (and/or the objects manipulated by the robotic arm) and the operator, is avoided.

### Brief description of the figures

Figure 1 schematically and partially shows a work station comprising a safety barrier for an opening according to the present invention;
figures 2 and 3 schematically and partially show a front view of the barrier of figure 1 respectively in the opening configuration and in the closing configuration;
figure 4 schematically and partially shows a top view of the barrier of figure 1;
figure 5 shows a detail of figure 4;
figure 6 shows a detail of a side view of the barrier of figure 1;
figure 7 schematically and partially shows a side view of the barrier of figure 1 in opening configuration;
figures 8-10 show a respective detail of figure 7.

### Detailed description of some embodiments of the invention

The characteristics and the advantages of the present invention will be further clarified by the following detailed description of some embodiments, presented by way of non-limiting example of the present invention, with reference to the attached figures.

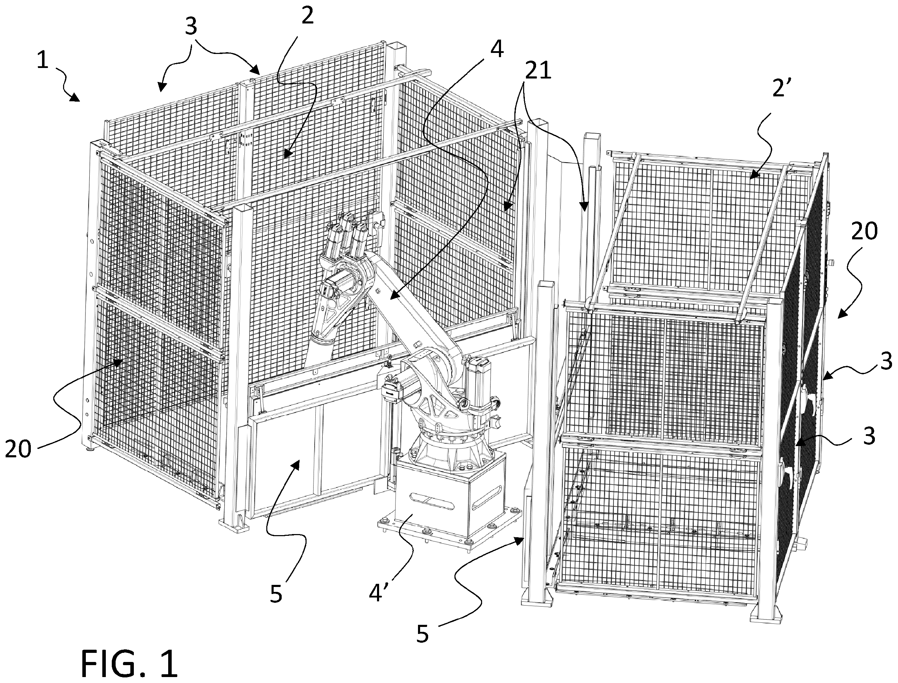

In figure 1, with number 1 a work station arranged inside a clean room or dry room (not further shown or described since, for example, of known type) is generally indicated.

The work station 1 comprises two distinct working areas 2, 2', each working area comprising a respective perimeter structure 20 which delimits the working area along the whole perimeter for physically and selectively preventing access of an operator to the working area.

Each perimeter structure 20 comprises a safety barrier 5, arranged at an opening 21 obtained in the perimeter structure. In the example each barrier 5 forms a rectilinear side of the respective perimeter structure 20.

Exemplarily the perimeter structure 20 comprises, for each working area 2, 2', at least one door 3 (in the illustrated example two doors 3 for each area which form a rectilinear side of the respective perimeter structure 20), arranged on a side of the perimeter structure opposite to the respective safety barrier 5, for allowing access of an operator to the working area. Exemplarily the perimeter structure 20, including the doors 3 but excluding the safety barrier 5, is constituted by protection panels in metal mesh supported by vertical uprights, the whole forming a protective cage.

Exemplarily the work station 1 comprises a robotic arm 4 interposed between the two working areas 2, 2' and having a base 4' arranged externally to both working areas 2, 2', for manipulating products in crossing of the opening 21 of both working areas.

Exemplarily the two working areas 2,2' (including the two safety barriers 5) are structurally identical to each other.

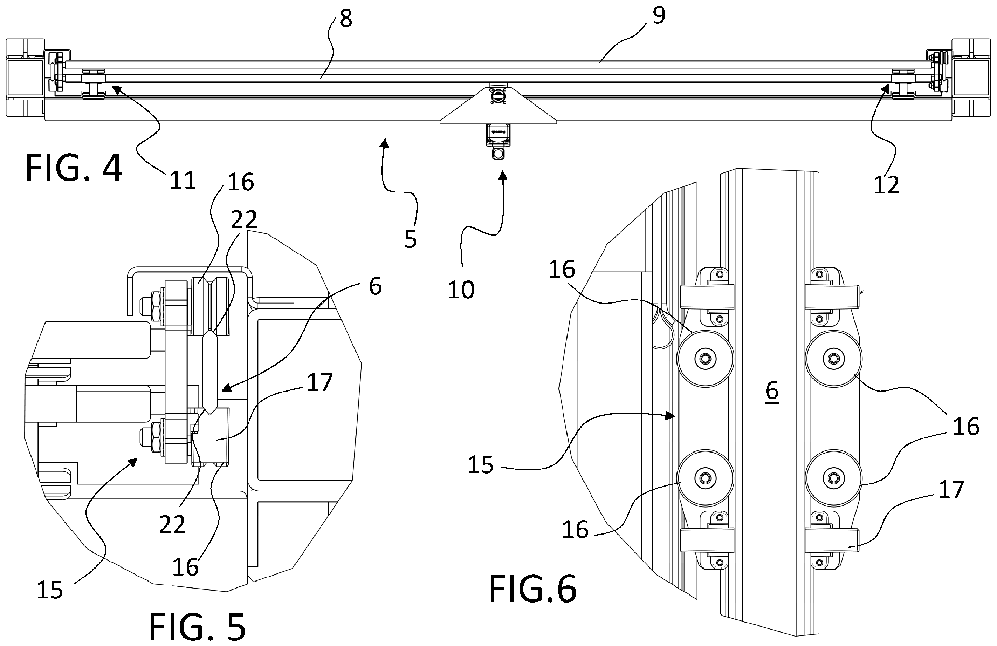

Exemplarily the barrier 5 comprises a pair of vertical guides 6 fixed to and supported by respective vertical uprights of the perimeter structure 20. Exemplarily each guide 6 is constituted by a vertical bar which presents a pair of opposed vertical rails 22, wherein each rail, in a horizontal section, has convex V-shape, namely with the vertex facing externally (Fig. 5).

The barrier 5 comprises a plurality of bulkheads positioned between the guides 6 and each having development on a respective vertical plane, such vertical planes being parallel to each other.

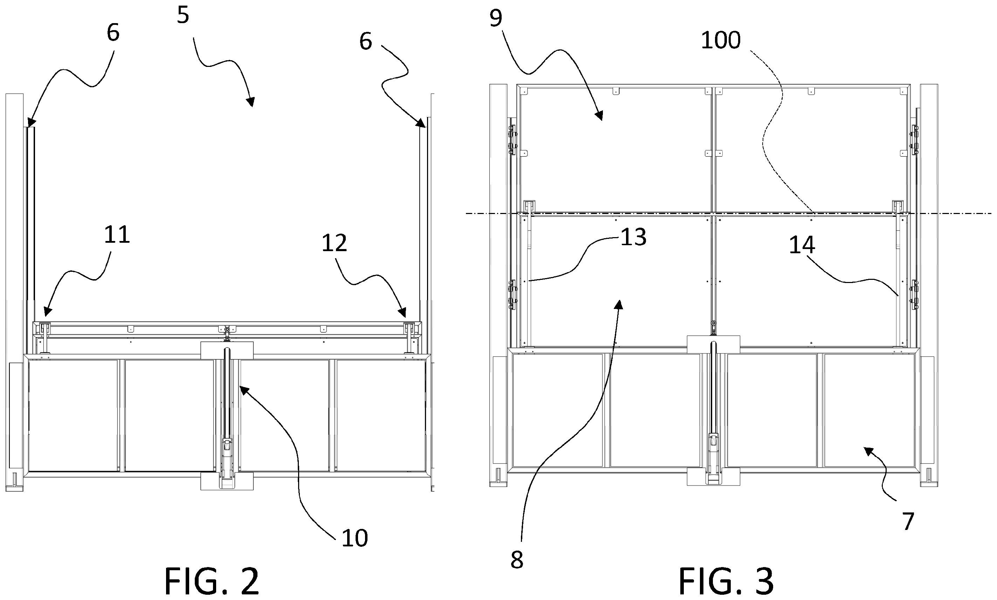

Exemplarily, as in the shown embodiment, the plurality of bulkheads comprises a fixed bulkhead 7 arranged at a lower position to the opening, a first movable bulkhead 8 and a second movable bulkhead 9, wherein the movable bulkheads 7,8 are movable in sliding along the same guides 6 (thanks to the vertically staggered position of the carriages on the two movable bulkheads), between a respective opening position (figure 2), wherein each movable bulkhead is horizontally side-by-side with the fixed bulkhead 7 (with the first movable bulkhead horizontally interposed between the fixed bulkhead and the second movable bulkhead), in order to leave the opening free, and a respective closing position (figure 3) wherein each movable bulkhead is in a raised position for completely closing the opening 21. In particular, in the closing position the second movable bulkhead 9 is higher than the first movable bulkhead 8, and the first movable bulkhead 8 is higher than the fixed bulkhead 7 (namely vertically interposed between the other two bulkheads).

Exemplarily the barrier 5 comprises an actuator 10 for vertically moving the first movable bulkhead 8 alternatively between the respective closing position and the respective opening position.

Exemplarily the actuator 10 comprises a fixed portion, fixed to the fixed bulkhead, and a movable portion, fixed to the first movable bulkhead 8 in a median position of the first movable bulkhead 8, with reference to a horizontal development direction 100 of the first movable bulkhead 8. With median position it is meant that the movable portion contacts the movable bulkhead 8 in at least one point of the movable bulkhead 8 comprised between 40% and 60% of the length of the movable bulkhead 8 itself along the horizontal development 100.

Exemplarily the actuator 10 is electric of ball screw type, wherein the movable portion comprises a helical screw which meshes with a motorized toothed wheel of the fixed portion.

In one embodiment the actuator 10 comprises a ratchet emergency brake (not shown).

Exemplarily the barrier 5 comprises a first 11 and a second pulley 12 directly fixed to an upper side of the first movable bulkhead 8 on opposite sides of the actuator 10 along the horizontal development direction 100 of the first movable bulkhead 8, in symmetrical position with respect to the actuator 10 (for example at horizontally opposite ends of the first movable bulkhead 8).

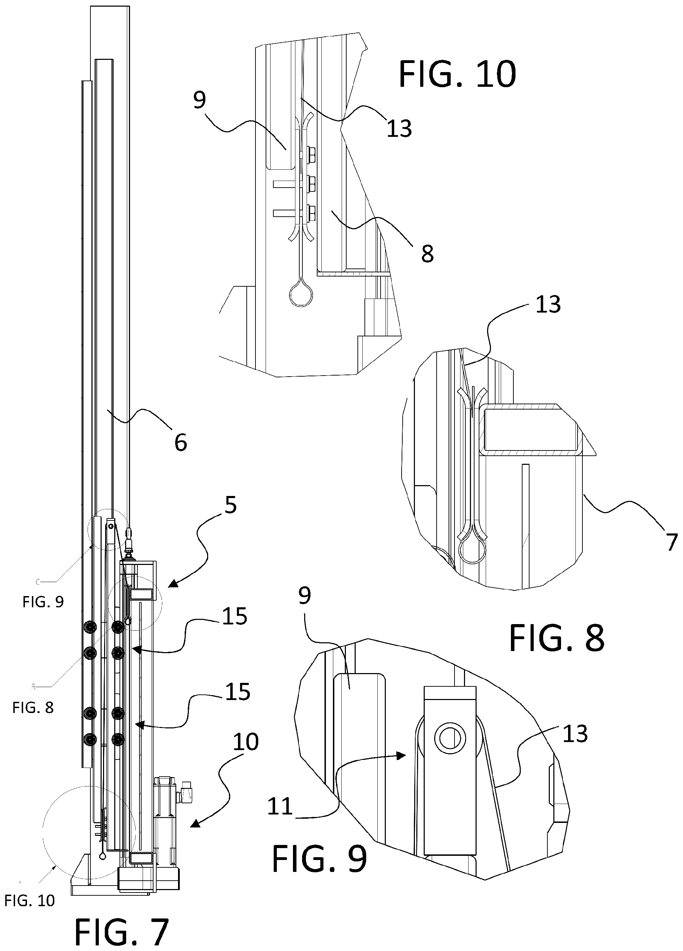

Exemplarily the pulleys 11, 12 are cylindrical (namely comprise a rotatable roller having cylindrical shape, visible in fig. 9), with horizontal rotation axis and parallel to the main development direction 100 of the bulkheads.

Exemplarily the barrier 5 comprises a first and second elongated transmission element 13,14 comprising a first end fixed to (e.g. directly fixed to an upper side of) the fixed bulkhead 7 (fig. 8) and a second end fixed to (e.g. a lower side of) the second movable bulkhead 9. Exemplarily the first and second elongated transmission element 13,14 respectively engage the first 11 and the second pulley 12 with a respective contact face, for moving the second movable bulkhead 9 synchronously to the movement of the first movable bulkhead 8. Exemplarily the kinematic mechanism constituted by the first and second pulley and by the first and second elongated transmission element allows displacement of the second movable bulkhead 9 by a vertical distance equal to twice the vertical distance travelled by the first movable bulkhead 8.

Exemplarily each elongated transmission element 13, 14 is a belt, e.g. in polyurethane reinforced with reinforcement elements in stainless steel or kevlar.

Exemplarily the reinforcement element can be a single wire or a strand or a rope.

Exemplarily the contact face of each elongated transmission element 13, 14 is substantially flat, in order to correspond with the cylindrical surface of the respective pulley.

Exemplarily each elongated transmission element 13, 14 is on a side of the respective barrier 5 external with respect to the respective working area 2, 2'.

Exemplarily the barrier 5 comprises, for each movable bulkhead 8,9, two carriages 15, as shown in detail in figures 5 and 6, which slidingly engage respectively the guides 6. Exemplarily each pair of carriages 15 supports the respective movable bulkhead 8,9 at respective horizontally opposite ends of the respective movable bulkhead 8,9.

Exemplarily each carriage 15 comprises, for each rail 22, a respective pair of vertically superposed rollers 16 which engage the rail in rolling, wherein each roller 16 has a circular groove countershaped to the V rail and which engages the rail in rolling (fig. 5). In other words, each carriage comprises four rollers opposite in pairs both horizontally and vertically.

Exemplarily each carriage 15 comprises, in proximity of each roller 16, a lubricating element 17 configured for sliding in strisciamento along the sliding guide, in particular along the respective rail 22. It is observed that in figures 4 and 5 one of such lubricating elements has been removed for better showing the underlying roller.

Exemplarily the lubricating element is a sponge impregnated with a lubricating oil.

In an embodiment not shown the barrier 5 comprises a third (and possibly one or more further) movable bulkhead arranged in series with the first and second movable bulkhead 8, 9, for closing a vertically higher opening and/or reducing the vertical height and/or the excursion of the movement of each movable bulkhead. In such case, the third movable bulkhead is coupled to the second movable bulkhead similarly to the coupling between the first and the second movable bulkhead 8,9 (e.g. by means of a further system of belts and pulleys).

Exemplarily the work station 1 comprises one or more sensors (not shown) for detecting the position of the first and/or second movable bulkhead of each safety barrier 5.

Exemplarily the work station 1 comprises a control unit (not shown) in communication with such sensors and programmed for alternatively allowing and denying an opening of a door 3 of one of the two working areas 2, 2' on condition that the detected position of the first and/or second movable bulkhead of the barrier 5 of such working area is the respective closing position and the respective opening position, respectively.

Preferably the control unit is programmed for allowing a movement of the first and second movable bulkhead from the respective closing position to the respective opening position only on condition that the respective door 3 (i.e. all the respective doors 3) are closed.

## Claims

1. Safety barrier (5) for an opening (21) comprising:
- a pair of vertical guides (6);
- a plurality of bulkheads positioned between said guides (6) and each having development on a respective vertical plane, wherein said plurality of bulkheads comprises:
- a fixed bulkhead (7) arranged at a lower position;
- a first and a second movable bulkhead (8,9), each movable bulkhead being movable in sliding along said guides (6) between a respective opening position, wherein the movable bulkhead is side-by-side with said fixed bulkhead (7) for leaving said opening free, and a respective closing position wherein the movable bulkhead is in a raised position for closing said opening (21);
- an actuator (10) configured for vertically moving said first movable bulkhead (8) alternatively between the respective closing position and the respective opening position;
- a first pulley (11) fixed to said first movable bulkhead (8); and
- a first elongated transmission element (13) comprising a first end fixed to the fixed bulkhead (7) and a second end fixed to said second movable bulkhead (9), said first elongated transmission element (13) engaging said first pulley (11) for moving said second movable bulkhead (9) synchronously to a movement of said first movable bulkhead (8),
**characterized in that** said actuator (10) is coupled to said first movable bulkhead (8) in a median position of said first movable bulkhead (8) with reference to a horizontal development direction (100) of the first movable bulkhead (8).

2. Barrier (5) according to claim 1, wherein said actuator (10) is electric.

3. Barrier (5) according to claim 1 or 2, wherein said actuator (10) is of ball screw type.

4. Barrier (5) according to any one of the preceding claims, comprising:
- a second pulley (12) fixed to said first movable bulkhead (8), said first and second pulley (11,12) being arranged on opposite sides of said actuator (10), and in symmetrical position with respect to said actuator (10), along said horizontal development direction (100) of the first movable bulkhead (8);
- a second elongated transmission element (14) comprising a respective first end fixed to the fixed bulkhead (7) and a respective second end fixed to said second movable bulkhead (9), said second elongated transmission element (14) engaging said second pulley (12) for moving said second movable bulkhead (9) synchronously to a movement of said first movable bulkhead (8).

5. Barrier (5) according to claim 4, wherein said first and second pulley (11, 12) are arranged at horizontally opposite ends of said first movable bulkhead (8).

6. Barrier (5) according to claim 4 or 5, wherein said first and second pulley (11,12) are directly fixed to an upper side of said first movable bulkhead (8).

7. Barrier (5) according to any one of the preceding claims, wherein said first end of said first elongated transmission element (13) is directly fixed to an upper side of said fixed bulkhead (7).

8. Barrier (5) according to any one of the preceding claims, comprising, for each movable bulkhead (8,9), two carriages (15) which slidingly engage respectively said guides (6), said two carriages (15) supporting the respective movable bulkhead (8,9) at respective horizontally opposite ends of the respective movable bulkhead (8,9).

9. Barrier (5) according to the preceding claim, wherein each guide (6) comprises a pair of opposed vertical rails (22), and wherein each carriage (15) comprises, for each rail (22), a respective pair of vertically superposed rollers (16) which engage said rail (22) in rolling.

10. Barrier (5) according to claim 9, wherein each rail (22), in a horizontal section, has convex V-shape and wherein each roller (16) has a circular groove countershaped to said rail (22) and which engages said rail in rolling.

11. Work station (1) comprising:
- a working area (2) comprising a perimeter structure (20) for physically and selectively preventing access of an operator into said working area (2), wherein the perimeter structure (20) comprises:
- a safety barrier (5) according to any one of the preceding claims arranged at an opening (21) obtained in said perimeter structure (20).

12. Work station (1) according to claim 11, wherein said first elongated transmission element (13) is on a side of said barrier (5) external with respect to said working area (2).

13. Work station (1) according to claim 11 or 12, wherein the perimeter structure (20) further comprises at least one door (3), distinct from said barrier (5), for allowing access of an operator into said working area (2), wherein said station comprises:
- a robotic arm (4) having a base (4') arranged externally to said working area (2) for manipulating products in crossing of said opening (21);
- one or more sensors for detecting a position of said first (8) and/or second movable bulkhead (9) and
- a control unit in communication with said one or more sensors and programmed for alternatively allowing and denying an opening of said door (3) on condition that said detected position of said first (8) and/or second movable bulkhead (9) is respectively said respective closing position and said respective opening position.

14. Work station (1) according to any one of claims 11 to 13, wherein said control unit is programmed for allowing a movement of said first and second movable bulkhead (8, 9) from said respective closing position to said respective opening position only on condition that said door (3) is closed.

15. Clean room or dry room comprising internally a work station according to any one of claims 11 to 14.
